# EUROPEAN PATENT SPECIFICATION

(11) **EP 3 241 703 B1**
(45) Date of publication and mention of the grant of the patent: **06.11.2019**
(21) Application number: 17173126.8
(22) Date of filing: 28.07.2010
(51) Int. Cl.: B60L 3/00

(54) **ELECTRIC VEHICLE SUPPLY EQUIPMENT HAVING A SOCKET AND A METHOD OF CHARGING AN ELECTRIC VEHICLE**
ELEKTROFAHRZEUGVERSORGUNGSAUSRÜSTUNG MIT EINER STECKDOSE UND VERFAHREN ZUM LADEN EINES ELEKTROFAHRZEUGS
ÉQUIPEMENT D'ALIMENTATION DE VÉHICULE ÉLECTRIQUE COMPRENANT UNE DOUILLE ET PROCÉDÉ DE CHARGEMENT D'UN VÉHICULE ÉLECTRIQUE

(30) Priority: 28.07.2009 US 229104 P; 23.12.2009 US 646276; 03.05.2010 US 772519
(43) Date of publication of application: 08.11.2017
(62) Divisional of application: 10171122.4
(73) Proprietor: Bosch Automotive Service Solutions Inc., Warren, Michigan 48092 (US)
(72) Inventor: MULLER, Michael, Harper Woods, Michigan 48225 (US)
(74) Representative: EIP

(56) References cited:
- WO-A1-2009/051014
- AU-A1- 2008 280 932
- US-A- 4 979 070
- US-A- 5 459 358
- US-A1- 2008 002 313
- Aerovironment: "AeroVironment EV Solutions(TM) Charging Dock Model EVSE-RS - USER GUIDE with Installation Instructions for Your Electrician", , 24 September 2010 (2010-09-24), XP055515452, United States Retrieved from the Internet: URL:http://www.evelectricity.com/charging/ stations/docs/av-manual.pdf [retrieved on 2018-10-15]
- Ieee: "Safety of Electric Vehicle Supply Equipment - IEEE Transportation Electrification Community", , 30 October 2013 (2013-10-30), XP055515437, Retrieved from the Internet: URL:https://tec.ieee.org/newsletter/octobe r-2013/safety-of-electric-vehicle-supply-e quipment [retrieved on 2018-10-15]
- Leviton: "Product Bulletin for Automatic Reset GFCI Devices", , 31 December 2009 (2009-12-31), XP055515434, Retrieved from the Internet: URL:https://www.mc-mc.com/ASSETS/DOCUMENTS /ITEMS/EN/Leviton_16593_Datasheet.pdf [retrieved on 2018-10-15]

## Description

### FIELD OF THE INVENTION

The present invention relates generally to providing power to recharge the batteries of battery electric vehicles and plug-in hybrid electric vehicles. More particularly, the present invention relates to electric vehicle power supply equipment to deliver Level I charging (up to 15 amps or 20 amps and 120 volts) and/or Level II charging (up to 80 amps and 240 volts) from an electrical socket.

### BACKGROUND OF THE INVENTION

Vehicles powered either fully or partially by batteries must at some point recharge their batteries. Particularly in the case of battery electric vehicles, the lack of an alternative power source, like one that a plug-in hybrid electric vehicle would have, causes the batteries to deplete faster and have a more limited range. Plug-in electric hybrids are generally less taxing on the batteries and built-in regenerative systems may suffice to recharge the batteries enough to go longer without having to plug-in the vehicle to recharge it. However, the driver will dictate the need for recharging an electric vehicle through the extent of use, driving conditions, and driving style. High mileage, stop-and-go traffic, and quick accelerations are all things that the driver may subject an electric vehicle to, and all will deplete the batteries faster than under ideal conditions.

The standard American electrical socket provides 120 volts A/C (alternating current). The common availability of the 120 volt A/C electricity supply makes it a convenient choice for the power supply for recharging the batteries of electric vehicles. Many garages, carports, or outdoor parking areas may currently have 120 volt A/C electrical outlets, or may easily have one added, so that the power source may be connected to the electric vehicle for Level I charging.

However, the 120 volt A/C electricity supply is often insufficient to recharge the batteries of an electric vehicle in a period of time to allow for convenient use of the electric vehicle. A full recharge may not even be completed overnight and partial recharges often take too much time to be practical. Providing a higher voltage electricity supply can greatly reduce the amount of time needed to recharge an electric vehicle. Such high voltage sources are available in homes and other locations, and may be used for Level II charging.

It is desirable to provide a convenient way of connecting the Level I or Level II electricity source to an electric vehicle to recharge the batteries thereby making recharging quicker and using an electric vehicle more practical. It is also desirable to provide a convenient way to plug the electric vehicle supply equipment to either a Level I or Level II electrical supply source using plugs and receptacles designed to meet National Electrical Manufacturers Association (NEMA) standards, and with minimal duplication of components. This will reduce the cost of the product, installation, service repair, relocation and greatly simplifying the local electrical permitting process. This will also make the electric vehicle more practical, acceptable and provide a lower cost of ownership for the vehicle consumer.

WO 2009/051014 A1 describes a hybrid vehicle comprising an accumulation device for outputting electric power to drive the vehicle. Motor generators and inventers act as power receiving units for receiving electric power from a power source outside of the vehicle to charge the accumulation device.

US 2008/002313 A1 describes resettable circuit interrupting devices having self-test and non-resettable or limited resettable power interrupting systems.

### SUMMARY OF THE INVENTION

At least in view of the above, it would be desirable to provide a system for connecting a high voltage electricity source to an electric vehicle to recharge its batteries. The foregoing needs are met, to a great extent, by certain embodiments of the present invention.

According to a first aspect of the invention there is provided an apparatus according to claim 1.

According to a second aspect of the present invention there is provided a method according to claim 13.

Preferred embodiments are defined in dependent claims.

[DELETED]

[DELETED]

Before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways. Also, it is to be understood that the phraseology and terminology employed herein, as well as the abstract, are for the purpose of description and should not be regarded as limiting.

As such, those skilled in the art will appreciate that the conception upon which this disclosure is based may readily be utilized as a basis for the designing of other structures, methods and systems for carrying out the several purposes of the present invention. It is important, therefore, that the claims be regarded as including such equivalent constructions insofar as they do not depart from the scope of the present invention.

### BRIEF DESCRIPTION OF THE DRAWINGS

FIG. 1 is a block diagram view of an apparatus for connecting an electric vehicle to Level I or Level II power source according to an embodiment of the invention.
FIG. 2 is a schematic view of an apparatus for connecting an electric vehicle to a Level I or Level II power source according to another embodiment of the invention.
FIG. 3 is an elevation view of an apparatus for connecting an electric vehicle to a Level I or Level II power source according to another embodiment of the invention.
FIG. 4 illustrates adapters for connecting an apparatus that connects to a Level I or Level II power source according to another embodiment of the invention.

In this respect, before explaining at least one embodiment of the invention in detail, it is to be understood that the invention is not limited in its application to the details of construction and to the arrangements of the components set forth in the following description or illustrated in the drawings. The invention is capable of embodiments in addition to those described and of being practiced and carried out in various ways. Also, it is to be understood that the phraseology and terminology employed herein, as well as the abstract, are for the purpose of description and should not be regarded as limiting.

### BRIEF DESCRIPTION OF THE DRAWINGS

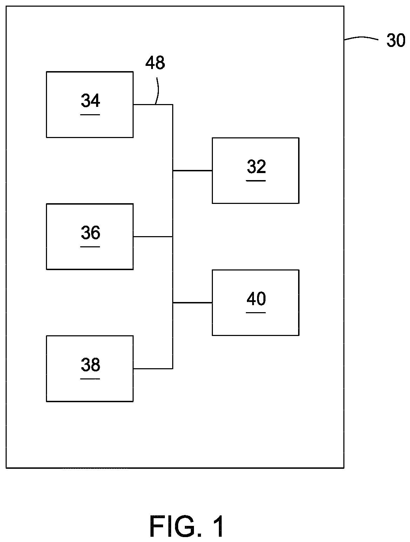

FIG. 1 is a block diagram view of an apparatus for connecting an electric vehicle to Level I or Level II power source according to an embodiment of the invention.

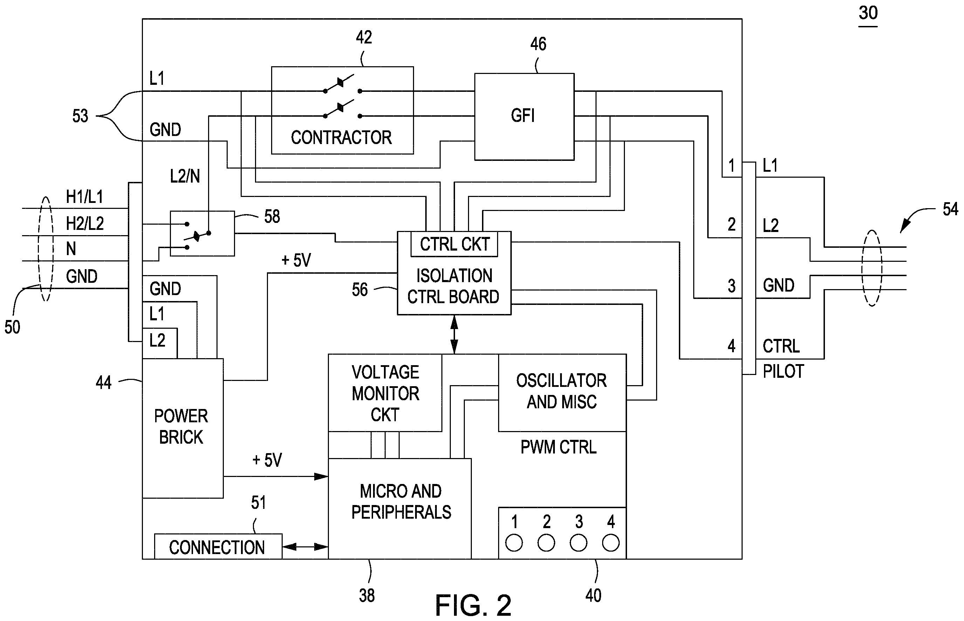

FIG. 2 is a schematic view of an apparatus for connecting an electric vehicle to a Level I or Level II power source according to another embodiment of the invention.

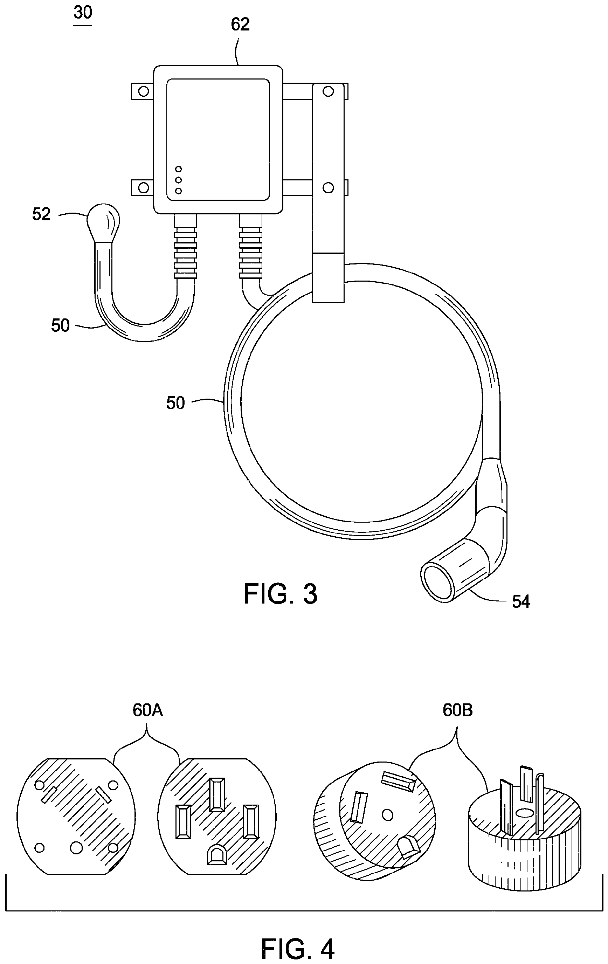

FIG. 3 is an elevation view of an apparatus for connecting an electric vehicle to a Level I or Level II power source according to another embodiment of the invention.
FIG. 4 illustrates adapters for connecting an apparatus that connects to a Level I or Level II power source according to another embodiment of the invention.

### DETAILED DESCRIPTION

An embodiment of the present inventive system for connecting an electric vehicle, such as a battery electric vehicle (BEV) or a plug-in hybrid electric vehicle (PHEV), to a Level I or II power source includes an apparatus, such as an electric vehicle supply equipment (EVSE) for connecting the electric vehicle to a power source. The EVSE may be employed to make a circuit connection to allow power from an electrical socket, like a wall socket, to flow to a charging circuit within the electric vehicle. The wall socket may be a standard outlet found in a residential garage or a socket at a powering station outside the residential garage. The power station may be positioned, for example, at a parking garage, at a public parking space, at a rest stop, a conventional gas station, or a powering station (similar to a gas station, but has power stations instead of gas pumps). Further, the EVSE may be constructed to at least meet industry standards, such as SAE J1772, UL 2594, and NEC Article 625. The SAE J2836 vehicle communication standard may also be considered in constructing the EVSE.

The EVSE has a socket connector at a first end to couple the EVSE to the electrical socket, such as a wall socket, and a vehicle connector at a second end to couple the EVSE to the electric vehicle. Once coupled,to both the wall socket and the vehicle, the EVSE may allow passage of electrical current from the wall socket to the electric vehicle, thus recharging the electric vehicles' batteries. This embodiment allows for the use of standard electrical outlets instead of hardwiring the EVSE directly to a power source.

Level I and Level II sockets are different in configurations. The EVSE may be constructed and/or provided with adapters to make the EVSE compatible with both a Level I and II socket. This may be accomplished through a combination of internal hardware and/or electrical components, external wiring components, and plug components and/or adapters.

In addition, the EVSE may analyze signals and/or data received from the electric vehicle. Analyzing the signals and/or data may involve checking the electric vehicle for specific conditions. While analyzing, the EVSE may determine when to allow and when to prohibit the flow of current between the socket and the electric vehicle.

The invention will now be described with reference to the drawing figures, in which like reference numerals refer to like parts throughout.

FIG. 1 is a block diagram view of an apparatus for connecting an electric vehicle to Level I or Level II power source. An EVSE is one such apparatus and may include an input device 32, a memory 34, a communication device 36, a processor 38, and a display 40, some or all of which can be interconnected by a data link 48. The EVSE 30 can be a general computing device, such as a personal computer (PC), a UNIX workstation, a server, a mainframe computer, a personal digital assistant (PDA), a cellular phone, a smartphone, some combination of these or any other suitable computing device. Alternatively, the EVSE 30 can be a specialized computing device made up of components specifically chosen to execute the functionality of the EVSE 30. The remaining components can include programming code, such as source code, object code or executable code, stored on a computer-readable medium that can be loaded into the memory 34 and processed by the processor 38 in order to perform the desired functions of the EVSE 30.

The processor 38 may be executed in different ways for different embodiments of the EVSE 30. One embodiment is that the processor 38 is a device that can read and process data such as a program instruction stored in the memory 34 or received from a source on the electric vehicle. Such a processor 38 may be embodied by a microcontroller. On the other hand, the processor 38 may be a collection of electrical circuitry components built to interpret certain electrical signals and perform certain tasks in response to those signals, or an integrated circuit.

The memory 34 may include, for example, any form or combination of volatile, non-volatile, solid state, magnetic, optical, permanent, removable, writable, rewriteable, and read-only memory. The memory 34 may contain a number of program instructions for use with the EVSE 30. The instructions may include methods, for example, for controlling the flow of current between the electrical socket and the electric vehicle. These methods may include controlling when to allow or prohibit the flow of current, or perhaps moderate the flow of current. The flow of current can be controlled based on various factors such as when off peak rates of an electrical utility are in progress; the usage of power, for example, within a house, a building, a power grid, or a parking structure; the availability of current or if the current is constant; scheduled power outages; availability of raw materials that are used in generating electricity; the availability of alternative means of generating availability; the weather at the local charging station or outlet, which can effect means of generating electricity, such as wind mills, and solar panels and the like.

Further, the memory may contain software having instructions related to diagnosing vehicle functions, such as OBD-II, battery testing, tire pressure sensor testing, emissions testing and the like. Further, the software may include the ability to track the status of various batteries in the vehicles, such as which batteries have been replaced, the remaining battery life of the various batteries, the warranty information about the batteries, the type of batteries used in the vehicle (mix and match) and the like. Many other embodiments may provide for further methods, some of which will be discussed herein.

Additionally, an example of the EVSE 30 can communicate information to a user through the display 40 and request user input through the input device 32 by way of an interactive, menu-driven, visual display-based user interface, or graphical user interface (GUI). The user may interactively input information using direct manipulation of the GUI. Direct manipulation can include the use of a pointing device, such as a mouse or a stylus, to select from a variety of selectable fields, including selectable menus, drop-down menus, tabs, buttons, bullets, checkboxes, text boxes, and the like. Nevertheless, various embodiments of the invention may incorporate any number of additional functional user interface schemes in place of this interface scheme, with or without the use of a mouse or buttons or keys, including for example, a trackball, a scroll wheel, a touch screen or a voice-activated system.

Some options that may be selected through the input device 32 may allow the user control over the charging of the electric vehicle. The user may select, for example, that the batteries be charged to or at a certain level or for a certain amount of time, a certain number of charges or start and stop at a certain time or at a particular event. Further, the user may select to be notified on a separate device, like on a cellular device, smart phone, pager, fax, remote control/display, or other wired and wireless devices, that the electric vehicle or charging is in a certain state, such as complete or faulted. The user is able to set the EVSE to control and power some of the vehicle's components while plugged in. For example, during different seasons the user may desire to heat or cool the vehicle as he gets ready for work in the morning so that the vehicle is comfortable when he gets in it. The EVSE may also control setting the radio, power seats and mirrors depending on user preferences. Through the use of the EVSE, other devices like a GPS, radar detector, and other devices that require boot or warm up periods may be powered on before the user enters the electric vehicle.

The display 40 may have a more simple implementation than previously mentioned, consisting of one or multiple indicators. Such indicators may consist of a small liquid crystal display (LCD) that can depict text or graphics. The LCD may be monochrome or colored. Other embodiments may include a single or multiple light emitting diodes (LED). This implementation could work for transmitting a limited number of simple messages. An LED may emit a single color of light, or it may be able to emit a number of different colors. Each LED or color may be associated with a different message. Some messages may include that power is available to charge the electric vehicle batteries, that charging the electric vehicle batteries is in progress, that the charging is complete, and that there is a fault or problem. The display may also be used to indicate the level of charge for the batteries, the number of times the batteries have been charged and the remaining charging time or the time the batteries have been charging.

The display 40 may also be separate from the EVSE or a second remote display can be utilized. The second remote display (not shown) can be a remote control panel that receives the same or similar information as the display 40. The second remote display can also control the EVSE in the same or similar manner as the display 40 or the input device 32.

FIG. 2 is a schematic view of an apparatus for connecting an electric vehicle to a Level I or Level II power source according to an embodiment of the invention. The EVSE 30 further includes a relay 42 (contactor), a voltage regulating device 44, a breaking device 46, and a switch 58, some or all of which may be connected by an electric conduit 50. A control circuit 56 may act as a buffer between different parts of the EVSE 30. At one end of the EVSE is a socket connector 52 (FIG. 3) and at the other end is a vehicle connector 54 (explained below).

The voltage regulating device 44 may be needed to power the electronic components of the EVSE 30. Since the EVSE 30 may draw its power from the same electrical socket it uses to charge the batteries of the electric vehicle, the EVSE 30 will be receiving high voltage electricity. The electrical socket may supply, for example 120 volts, 220 volts or 240 volts. The high voltage of the power drawn from the electrical socket could damage some of the electronic components of the EVSE 30. Thus, the voltage regulator device 44, such as a transformer or a voltage regulator, may be employed between to the electrical socket and the electrical components of the EVSE 30. The voltage may then be lowered to a level that is manageable to the electrical components, such as, for example, 5 volts or 12 volts. In other embodiments, the voltage regulator device 44 can increase the voltage as needed by the EVSE 30.

While the voltage regulating device 44 may regulate the voltage to parts of the EVSE 30, there are parts where electricity may flow unaltered from the electrical socket to the electric vehicle. An electric conduit may run the length of the EVSE 30.

In one embodiment of the invention, the electric conduit 50 may be of the type having a gauge and/or rating such that it may appropriately handle the range of supplied current from the electrical socket. That being, the electric conduit 50 should be able to handle at least the highest supplied current, and in turn it will also be able to handle lower levels of current. The electric conduit 50 may be one appropriate for handling Level I and Level II charging or any level of charging. The electric conduit 50 suited for Level 2 charging may be comprised of a combination of conduits including, for example, two conduits for power supply (L1 and L2), one conduit as a neutral, and one conduit as a ground. The supplied current may be split over L1 and L2, thus aiding in supplying the proper current for Level I and Level II charging.

In connecting the electric conduit to the internal components of the EVSE 30, it may be convenient to connect some or all of the combination of conduits that make up the electric conduit 50 to the different internal components. For example, the voltage regulating device 44, as discussed above, receives power from the supplied power from the electrical socket the EVSE 30 connects to. To receive this power, the voltage regulating device 44 may be connected to, at least, L1 and/or L2.

The electric conduit 50 includes a relay 42 that may be placed to bridge segments of the electric conduit 50, allowing the EVSE 30 to start and stop the flow of current to the electric vehicle. The electric conduit 50 is connected to a voltage regulator to step up or step down the voltage passed to the electric vehicle. Further, to aid in providing the proper current to charge the electric vehicle, it is possible to provide the relay 42 with some or all of the current provided by the electrical socket. Power supply conduits L1 and L2 may both be connected to the relay 42. Alternatively, the relay 42 may be connected to only either conduit L1 or L2.

In an alternative embodiment, it may be that when only connected to conduit L1 or L2, the relay 42 may only enable the EVSE 30 to be able to provide the vehicle with Level I charging capabilities. Thus, to enable the EVSE 30 to provide Level II charging capabilities, as well as Level I charging, it maybe a possible to provide a switch 58 that will allow the EVSE 30 to selectively connect the unconnected conduit, either L1 or L2, to the relay 42. In one embodiment, the switch 58 may be connected to, at least, the conduit, either L1 or L2, not already connected to the relay 42. Further, the switch 58 may be connected to the control circuit 56 that controls when the switch allows for the selective connection of the unconnected conduit, either L1 or L2, to the relay 42. The control function will be discussed below.

Also connected to the electric conduit 50 is a breaking device 46 (also called a ground device or a current monitor). The breaking device 46 is intended to cut power along the electric conduit 50 quickly so as to avoid harming a user with a high voltage electric shock, harming the components of the EVSE or damaging the electric vehicle. The breaking device 46 is a ground fault interrupter. If the breaking device 46 trips and cuts power, EVSE 30 has an auto-reset function to attempt to restore the power transfer to the electric vehicle. The auto-reset function attempts to restore the power transfer after a determined time and/or for a determined number of tries. The auto-reset functions allows for continuous charging of the vehicle should a power surge occurs while the user is asleep or away from the charging location.

The control circuit 56 may be connected to the electric conduit 50 and to the data link 48. Acting as a buffer between two portions of the EVSE 30, the control circuit passes signals from the electric conduit 50 representing the voltage on the electric conduit 50 to the processor 38. From these signals, the processor 38 reacts accordingly to control the relay 42 and the breaking device 46. Further, the processor 38, and other components, such as a voltage monitor, an oscillator, and a pulse width modulator may act accordingly to conduct a number of functions of the EVSE 30. The control circuit 56 may also be connected to the voltage control device 44 for power, and a control pilot pin of a vehicle connector (discussed below) to pass on signals from the vehicle to the other components of the EVSE 30.

In the switch's 58 initial state, it will be open, thereby causing a disconnect between the unconnected conduit, either L1 or L2, and the relay 42. When the EVSE 30 is connected to a Level I electrical socket, the control circuit 56 would recognize that there exists a 120 volt drop between the powered conduit, either L1 or L2, and the neutral conduit of the electric conduit 50 and leave the circuit between the unconnected conduit, either L1 or L2, and the relay 42 open. Alternatively, when the EVSE 30 is plugged into a Level II electrical socket, then the control circuit 56 would recognize the power on the unconnected conduit and, either via a signal from the processor 38 or via logical circuitry, provide a signal to the switch 58 to close the circuit between the unconnected conduit and the relay 42. With the circuit closed, the relay 42 is connected to both power supply conduits, L1 and L2, of the electric conduit 50, and the EVSE 30 can provide the electric vehicle with Level II charging capabilities.

The EVSE also includes peripheral connection 51 that can add additional functionality to it, including USB, Fire-Wire, card reader, vehicle connector interface (for OBD-II, and the like connections), CD, DVD, memory, wireless communication, and additional hardware and software. The EVSE's software can be updated via the peripheral connection 51. Additional hardware can be added to include, for example, additional processor, memory, FPGA (field programmable gate array), ASIC, pin connections, multiplexor and the other hardware to expand the functionality of the EVSE.

FIG. 3 is an elevation view of an apparatus for connecting an electric vehicle to a Level I or Level II power source according to another embodiment of the invention. Attached to a respective end of the electric conduit 50 may be the socket connector 52 and the vehicle connector 54. The socket connector 52 may couple with the electrical socket to allow electricity to flow to the EVSE 30. Any of a number of available or proprietary connectors may be used for the socket connector 52. Such available connectors may include a NEMA 5 plug, for example, a NEMA 5-15 plug for Level I charging, or a NEMA 14 plug, for example, a NEMA 14-50P plug for Level II charging, if appropriate for the electrical socket. These socket connectors 52 may be interchangeable. Alternatively, the socket connector may be of an appropriate type for Level I or Level II charging, and an adapter 60 may be used to adapt the socket connector 52 to work for the other type of charging, as discussed below. Connected to the opposite end of the electric conduit 50 may be the vehicle connector 54, which also may be any number of available or proprietary connectors. One such example of a vehicle connector 54 may be a five-pin connector including two power pins, a ground pin, a control pilot pin, and a proximity sensor pin as specified in the SAE standard J1772 and designed by Yazaki of North America.

The EVSE 30 includes a housing 62. The housing 62 encases a number of the components of the EVSE 30, for example, all the components previously mentioned except for portions of the electric conduit 50, the socket connector 52 and the vehicle connector 54. A bracket may be attached to the housing 62 to mount the housing 62 on a vertical surface such as a wall or post. The housing 62 or bracket may further include a hook to hang the power conduit 50. Alternatively, the power conduit may be retractable into the housing 62.

The EVSE 30 may be available for both indoor and outdoor applications. Proper weather proofing may be part of the housing to protect the components from damage and the users from injury. Some outdoor installations of the EVSE 30 may include burial in the ground, being attached to a post, or integrated into a pedestal.

FIG. 4 illustrates adapters 60A and 60B for connecting an apparatus that connects to a Level I or Level II power source. If the socket connector 52 is, for example, a NEMA type 5 plug suitable for Level I charging is at the end of the electric conduit 50, and it is desired to plug the EVSE 30 into a Level II socket, then the adapter 60A is configured to accept the prongs of the socket connector 52 (with NEMA type 5 plug) and has prongs configured to be inserted into a Level II socket. Alternatively, if the socket connector 52 is, for example, a NEMA type 14 plug suitable for Level II charging is at the end of the electric conduit 50, and it is desired to plug the EVSE 30 into a Level I socket, then the adapter 60B is configured to accept the prongs of the socket connector 52 (with NEMA type 14 plug) and has prongs configured to be inserted into a Level I socket. An example of an adapter 60B that would allow for connecting the socket connector 52 configured to connect to a Level II socket to connect to a Level I socket is the Marinco 50A to 15A RV Pigtail Adapter 150SPPRV.

Referring back to FIG. 1, in various embodiments, the EVSE 30 can be coupled to a communication network. The communication network allows for communication between the EVSE 30 and a remote device. The EVSE 30 can be coupled to the communication network by way of the communication device 36 which in various embodiments can incorporate any combination of devices-as well as any associated software or firmware-configured to couple processor-based systems. Such communication devices 36 may include modems, network interface cards, serial buses, parallel buses, LAN or WAN interfaces, wired, wireless or optical interfaces, and the like, along with any associated transmission protocols, as may be desired or required by the design.

The communication network links the communication device 36 of the EVSE 30 with the remote device. Various embodiments of the communication network may include any viable combination of devices and systems capable of linking computer-based systems, such as USB; Bluetooth; WiFi; ZigBee; power line communication (PLC); home area network (HAN); Silver Spring network; stable election protocol (SEP); the Internet; TCP/IP; an intranet or extranet; a local area network (LAN); a wide area network (WAN); a direct cable connection; a private network; a public network; an Ethernet-based system; a token ring; a value-added network; a telephony-based system, including, for example, T1 or E1 devices; a cellular telephony system, for example, GPRS or GSM; an Asynchronous Transfer Mode (ATM) network; a wired system; a wireless system; an optical system; a combination of any number of distributed processing networks or systems or the like.

The remote device may be a common remote device, such as a electronic control unit of a vehicle, an example of which often used in vehicles for receiving diagnostic signals such an OBD-II signals. The remote device may also be a proprietary remote device, such as one developed for use with a specific brand of engine or specific model of engine. Further embodiments may encompass the remote device being a data receiver for a tire pressure management system. In either of these cases, the communication device 36 may be able to connect with a dealer, manufacturer, service department, government entity such as a state inspection office, etc. and report the findings transmitted from the remote device.

Moreover, the remote device may be a wireless device with a display that gives the user information about the status of the electric vehicle connected to the EVSE 30. The remote device may be such that it is easily placed within a room in a building, or even attached to a key like a key chain. The information delivered to the user may include charge status of the vehicle, diagnostic messages, tire pressure management system messages, and other vehicle related information.

The EVSE 30 may also act as a remote control allowing the user to control function of the car, like power, air conditioning and heat, radio settings, power seat and mirror settings, etc. The EVSE 30 may also have internet access or similar communication access to remote server in order to obtain information such as emails, weather report, web pages, stock information, diagnostic databases and the other information.

The communication device 36 may also be able to communicate with the local utility company. This may allow for the utility company to know that the vehicle in connected and to charge the vehicle at a certain time of the day, such as during off-peak hours, if requested by the user. One embodiment to implement this feature is through the remote device, where the remote device encompasses a smart meter or a computerized utility meter. The EVSE 30 may communicate with the smart meter to determine when the EVSE 30 should charge the vehicle depending on certain parameters. If it is a goal to reduce energy costs, the smart meter may determine at what time of the day the rate for electricity is lowest, and during that time, tell the EVSE 30 to charge the vehicle. The EVSE 30 may also communicate with the smart meter to indicate when the vehicle is charging and how much charging is required. With this information the smart meter may be able to manage the power consumption of the rest of a house to keep overall power consumption at or below a desired level.

Other embodiments of the EVSE 30 may allow for multiple power conduits 50, each with its own vehicle connector 54. The EVSE 30 may charge the vehicles simultaneously or switch from one vehicle to another after the first vehicle has completed recharging. There may also be an adapter that allows the socket connector to connect to low voltage sockets, such as ones that provide 120 volts or less, as discussed herein. In other embodiments, the EVSE 30 can connect to alternative power sources that use renewable energy to charge the vehicle. Such sources may include solar panels and wind turbines, for example. If the alternative power sources alone are insufficient, then they may be supplemented by an electrical socket connected to a utility company source.

As stated above, the EVSE may potentially perform a variety of other functions in addition to its primary purpose of charging the electric vehicle. Multiple embodiments may also include any number of functions that may be considered secondary purposes of the EVSE. A few examples of these functions may include conducting battery tests and reporting the state of the batteries and the number of times the batteries have been charged. The EVSE may also conduct vehicle diagnostics, execute a tire pressure management system, run an emissions analysis, etc.

## Claims

1. Apparatus (30) for connecting an electric vehicle to an electrical socket, comprising:
a socket connector (52) configured to couple with the electrical socket to receive 220 to 240 volts alternating current;
a housing (62);
a power conduit (50) connected to the socket connector (52) and configured to convey a voltage from the electrical socket, the power conduit (50) extending from the socket connector (52) to the housing (62), through the housing (62), and out the housing (62);
a power control device comprising a relay (42) to bridge portions of the power conduit (50) arranged in the housing (62) and connected to the power conduit (50);
a current monitor comprising a ground fault interrupter (46) arranged in the housing (62) and connected to the power conduit (50);
a control circuit (56) arranged in the housing (62) and connected to the power conduit (50) and configured to generate signals corresponding to the voltage along the power conduit;
a vehicle connecter (54) connected to the power conduit (50) configured to connect to the electric vehicle to deliver the 220 to 240 volts alternating current to the vehicle, the vehicle connector (54) comprising a SAE J1722 connector;
a processor (38) arranged in the housing (62) and connected to the control circuit (56) and configured to receive the signals corresponding to the voltage along the power conduit from the control circuit (56) and send signals to the control circuit (56), wherein the processor (38) is configured to react according to the signals received from the control circuit (56) to control the relay (42) and the ground fault interrupter (46) and wherein the processor (38) is further configured to control components of the electric vehicle including heating or cooling of the vehicle;
an auto-reset function configured to, if the ground fault interrupter (46) interrupts power transfer to the electric vehicle, restore power transfer to the electric vehicle after an interruption of power transfer for a predetermined period of time or for a predetermined number of tries; and
a voltage regulator (44) configured to step up or step down the voltage to provide regulated voltage to the processor (38).

2. The apparatus of claim 1, wherein the current monitor is disposed between the power control device and the vehicle connector (54).

3. The apparatus of claim 1, wherein the control circuit is configured to isolate the processor from the voltage along the power conduit.

4. The apparatus of claim 1, wherein the control circuit (56) is connected to the power conduit (50) before the power control device and after the current monitor.

5. The apparatus of claim 1, wherein the control circuit (56) is connected to the vehicle connector (54).

6. The apparatus of claim 1, wherein the power conduit (50) connects to the power control device and the voltage regulator (44), wherein the power control device is connected to the vehicle connector (54) such that the power control device controls the flow or magnitude of the voltage to the vehicle connector (54), and the voltage regulator (44) is connected to the control circuit (56) and the processor (38) such that the voltage regulator (44) controls the flow or magnitude of voltage to the control circuit (56) and the processor (38).

7. The apparatus of claim 1, comprising:
a voltage monitor connected to the processor (38);
a pulse width modulator connected to the processor (38); and
a display (40) connected to the processor (38).

8. The apparatus of claim 6, wherein the display (40) is selected from one of an LED display and an LCD display.

9. The apparatus of claim 1, wherein the housing (62) is configured to be mounted on a wall or post.

10. The apparatus of claim 1, comprising a peripheral connection (51) to connect to at least one of a USB connector, Fire-Wire connector, card reader, OBD-II vehicle connector interface, and a wireless communication device.

11. The apparatus of claim 1, comprising an input device (32) configured to receive input from a user.

12. A method of charging an electrical vehicle, comprising:
receiving a 220 to 240 volts alternating current from a power source;
conducting the 220 to 240 volts alternating current from the power source to the electrical vehicle via a power conduit (50);
controlling the voltage flowing on the power conduit (50) with a switching relay (42);
isolating a processor (38) from the voltage on the power conduit (50) with a control circuit (56);
cutting power to the electrical vehicle with a ground fault interrupter (46);
passing signals from the power conduit (50) representing the voltage on the power conduit (50) to the processor (38) via the control circuit (56), wherein the processor is configured to react according to the signals passed from the power conduit (50) to control the relay (42) and the ground fault interrupter (46);
restoring, with an auto-reset function, power transfer to the electric vehicle after an interruption of power transfer for a predetermined period of time or for a predetermined number of tries, if the ground fault interrupter (46) interrupts power transfer to the electric vehicle;
controlling, with the processor (38), components of the electric vehicle including heating or cooling of the vehicle;
displaying information to a user with a display (40);
receiving input from a user with an input device (32); and
providing a peripheral connection (51) to connect to at least one of a USB connector, Fire-Wire connector, card reader, OBD-II vehicle connector interface, and a wireless communication device.

## Patentansprüche

1. Vorrichtung (30) zum Anschließen eines Elektrofahrzeugs an eine elektrische Steckdose, umfassend:
einen Steckverbinder (52), der eingerichtet ist, mit der elektrischen Steckdose verbunden zu werden, um 220 bis 240 V Wechselstrom aufzunehmen;
ein Gehäuse (62);
eine Stromleitung (50), die mit dem Steckverbinder (52) verbunden und eingerichtet ist, eine Spannung vom Steckverbinder zu übertragen, wobei die Stromleitung (50) sich vom Steckverbinder (52) zum Gehäuse (62), durch das Gehäuse (62) und aus dem Gehäuse (62) heraus erstreckt;
eine Leistungssteuerungsvorrichtung, die ein Relais (42) umfasst, um Abschnitte der Stromleitung (50) zu überbrücken, die im Gehäuse (62) angeordnet und mit der Stromleitung (50) verbunden ist;
eine Stromüberwachung, die einen Erdschlussunterbrecher (46) umfasst, im Gehäuse (62) angeordnet und mit der Stromleitung (50) verbunden ist;
eine Steuerschaltung (56), die im Gehäuse (62) angeordnet, mit der Stromleitung (50) verbunden und eingerichtet ist, Signale zu erzeugen, die der Spannung auf der Stromleitung entsprechen;
einen Fahrzeugverbinder (54), der mit der Stromleitung (50) verbunden und eingerichtet ist, mit einem Elektrofahrzeug verbunden zu werden, um die 220 bis 240 V Wechselstrom an das Fahrzeug zu liefern, wobei der Fahrzeugverbinder (54) einen SAE J1722 Verbinder aufweist;
einen Prozessor (38), der im Gehäuse (62) angeordnet, mit der Steuerschaltung (56) verbunden und eingerichtet ist, Signale von der Steuerschaltung (56) zu empfangen, die der Spannung auf der Stromleitung entsprechen, und Signale an die Steuerschaltung (56) zu senden, wobei der Prozessor (38) eingerichtet ist, in Übereinstimmung mit den von der Steuerschaltung (56) empfangenen Signalen zu reagieren, um das Relais (42) und den Erdschlussunterbrecher (46) zu steuern, und wobei der Prozessor (38) ferner eingerichtet ist, Komponenten des Elektrofahrzeugs, umfassend ein Heizen oder Kühlen des Fahrzeugs, zu steuern;
eine Auto-Rücksetzfunktion, die eingerichtet ist, wenn der Erdschlussunterbrecher (46) eine Energieübertragung an das Elektrofahrzeug unterbricht, die Energieübertragung an das Elektrofahrzeug nach einer Unterbrechung der Energieübertragung für eine vorbestimmte Zeitperiode oder für eine vorbestimmte Anzahl von Versuchen wiederherzustellen; und
einen Spannungsregler (44), der eingerichtet ist, die Spannung zu erhöhen oder zu verringern, um eine geregelte Spannung für den Prozessor (38) bereitzustellen.

2. Vorrichtung nach Anspruch 1, wobei die Stromüberwachung zwischen der Leistungssteuerungsvorrichtung und dem Fahrzeugverbinder (54) angeordnet ist.

3. Vorrichtung nach Anspruch 1, wobei die Steuerschaltung eingerichtet ist, den Prozessor von der Spannung auf der Stromleitung zu isolieren.

4. Vorrichtung nach Anspruch 1, wobei die Steuerschaltung (56) mit der Stromleitung (50) vor der Leistungssteuerungsvorrichtung und nach der Stromüberwachung verbunden ist.

5. Vorrichtung nach Anspruch 1, wobei die Steuerschaltung (56) mit dem Fahrzeugverbinder (54) verbunden ist.

6. Vorrichtung nach Anspruch 1, wobei die Stromleitung (50) die Leistungssteuervorrichtung und den Spannungsregler (44) verbindet, wobei die Leistungssteuervorrichtung mit dem Fahrzeugverbinder (54) verbunden ist, sodass die Leistungssteuervorrichtung den Fluss oder die Höhe der Spannung für den Fahrzeugverbinder (54) steuert und der Spannungsregler (44) mit der Steuerschaltung (56) und dem Prozessor (38) verbunden ist, sodass der Spannungsregler (44) den Fluss oder die Höhe der Spannung für die Steuerschaltung (56) und den Prozessor (38) steuert.

7. Vorrichtung nach Anspruch 1, umfassend:
eine Spannungsüberwachung, die mit dem Prozessor (38) verbunden ist;
ein Pulsweitenmodulator, der mit dem Prozessor (38) verbunden ist; und
eine Anzeige (40), die mit dem Prozessor (38) verbunden ist.

8. Vorrichtung nach Anspruch 6, wobei die Anzeige (40) ausgewählt ist von einem von einem LED-Display und einem LCD-Display.

9. Vorrichtung nach Anspruch 1, wobei das Gehäuse (62) eingerichtet ist, an einer Wand oder einem Pfosten angebracht zu werden.

10. Vorrichtung nach Anspruch 1, umfassend eine Peripherieverbindung (51), um mindestens eines von einem USB-Verbinder, einem Fire-Wire-Verbinder, einem Kartenleser, einer OBD-II-Fahrzeugverbinderschnittstelle und einer Drahtloskommunikationsvorrichtung zu verbinden.

11. Vorrichtung nach Anspruch 1, umfassend eine Eingabevorrichtung (32), die eingerichtet ist, Eingaben von einem Benutzer zu empfangen.

12. Verfahren zum Laden eines Elektrofahrzeugs, umfassend:
Empfangen eines 220 bis 240 V Wechselstroms von einer Energiequelle;
Leiten des 220 bis 240 V Wechselstroms von der Energiequelle an das Elektrofahrzeug über eine Stromleitung (50);
Steuern der Spannung, die in der Stromleitung (50) fließt, mit einem Schaltrelais (42);
Isolieren eines Prozessors (38) von der Spannung auf der Stromleitung (50) mit einer Steuerschaltung (56);
Unterbrechen der Energie für das Elektrofahrzeug mit einem Erdschlussunterbrecher (46);
Übergeben von Signalen von der Stromleitung (50), die die Spannung auf der Stromleitung (50) repräsentieren, an den Prozessor (38) über eine Steuerschaltung (56), wobei der Prozessor eingerichtet ist, in Übereinstimmung mit den Signalen, die von der Stromleitung (50) übergeben wurden, zu reagieren, um das Relais (42) und den Erdschlussunterbrecher (46) zu steuern;
Wiederherstellen der Energieübertragung an das Elektrofahrzeug nach einer Unterbrechung der Energieübertragung für eine vorbestimmte Zeitperiode oder für eine vorbestimmte Anzahl von Versuchen mit einer Auto-Rücksetzfunktion, wenn der Erdschlussunterbrecher (56) die Energieübertragung an das Elektrofahrzeug unterbricht;
Steuern von Komponenten des Elektrofahrzeugs mit dem Prozessor (38), umfassend Heizen oder Kühlen des Fahrzeugs;
Anzeigen von Informationen für einen Benutzer mit einer Anzeige (40);
Empfangen einer Eingabe von einem Benutzer mit einer Eingabevorrichtung (32); und
Bereitstellen einer Peripherieverbindung (51), um mindestens eines von einem USB-Verbinder, einem Fire-Wire-Verbinder, einem Kartenleser, einer OBD-II-Fahrzeugverbinderschnittstelle und einer Drahtloskommunikationsvorrichtung zu verbinden.

## Revendications

1. Appareil (30) destiné à relier un véhicule électrique à une prise électrique, comprenant :
un connecteur de prise (52) configuré pour être couplé à la prise électrique afin de recevoir un courant alternatif 220 à 240 volts ;
un boîtier (62) ;
un conduit d'alimentation (50) relié au connecteur de prise (52) et configuré pour acheminer une tension provenant de la prise électrique, le conduit d'alimentation (50) s'étendant du connecteur de prise (52) au boîtier (62), à travers le boîtier (62) et hors du boîtier (62) ;
un dispositif de commande d'alimentation comprenant un relais (42) pour former un pont entre des parties du conduit d'alimentation (50) agencées dans le boîtier (62) et reliées au conduit d'alimentation (50) ;
un relais à seuil de courant comprenant un disjoncteur différentiel (46) agencé dans le boîtier (62) et relié au conduit d'alimentation (50) ;
un circuit de commande (56) agencé dans le boîtier (62) et relié au conduit d'alimentation (50) et configuré pour générer des signaux correspondant à la tension le long du conduit d'alimentation ;
un connecteur de véhicule (54) relié au conduit d'alimentation (50) configuré pour être relié au véhicule électrique afin de délivrer le courant alternatif 220 à 240 volts au véhicule, le connecteur de véhicule (54) comprenant un connecteur SAE J1722 ;
un processeur (38) agencé dans le boîtier (62) et relié au circuit de commande (56) et configuré pour recevoir les signaux correspondant à la tension le long du conduit d'alimentation à partir du circuit de commande (56) et envoyer des signaux au circuit de commande (56), où le processeur (38) est configuré pour réagir en fonction des signaux reçus à partir du circuit de commande (56) afin de commander le relais (42) et le disjoncteur différentiel (46) et où le processeur (38) est en outre configuré pour commander des composants du véhicule électrique y compris le chauffage ou le refroidissement du véhicule ;
une fonction de réinitialisation automatique configurée pour, si le disjoncteur différentiel (46) interrompt le transfert de puissance au véhicule électrique, rétablir le transfert de puissance au véhicule électrique après une interruption du transfert de puissance pendant une période de temps prédéterminée ou pendant un nombre d'essais prédéterminé ; et
un régulateur de tension (44) configuré pour augmenter ou réduire la tension afin de fournir une tension régulée au processeur (38).

2. Appareil de la revendication 1, dans lequel le relais à seuil de courant est disposé entre le dispositif de commande d'alimentation et le connecteur de véhicule (54) .

3. Appareil de la revendication 1, dans lequel le circuit de commande est configuré pour isoler le processeur de la tension le long du conduit d'alimentation.

4. Appareil de la revendication 1, dans lequel le circuit de commande (56) est relié au conduit d'alimentation (50) avant le dispositif de commande d'alimentation et après le relais à seuil de courant.

5. Appareil de la revendication 1, dans lequel le circuit de commande (56) est relié au connecteur de véhicule (54).

6. Appareil de la revendication 1, dans lequel le conduit d'alimentation (50) est relié au dispositif de commande d'alimentation et au régulateur de tension (44), où le dispositif de commande d'alimentation est relié au connecteur de véhicule (54) de sorte que le dispositif de commande d'alimentation commande la circulation ou l'amplitude de la tension vers le connecteur de véhicule (54), et le régulateur de tension (44) est relié au circuit de commande (56) et au processeur (38) de sorte que le régulateur de tension (44) commande la circulation ou l'amplitude de la tension vers le circuit de commande (56) et le processeur (38).

7. Appareil de la revendication 1, comprenant :
un relais à seuil de tension relié au processeur (38) ;
un modulateur d'impulsions en durée relié au processeur (38) ; et
un dispositif d'affichage (40) relié au processeur (38) .

8. Appareil de la revendication 6, dans lequel le dispositif d'affichage (40) est sélectionné parmi un dispositif d'affichage à DEL et un dispositif d'affichage LCD.

9. Appareil de la revendication 1, dans lequel le boîtier (62) est configuré pour être monté sur un mur ou un support.

10. Appareil de la revendication 1, comprenant un raccord périphérique (51) à relier à au moins l'un d'un connecteur USB, d'un connecteur FireWire, d'un lecteur de carte, d'une interface de connecteur de véhicule OBD-II et d'un dispositif de communication sans fil.

11. Appareil de la revendication 1, comprenant un dispositif d'entrée (32) configuré pour recevoir une entrée à partir d'un utilisateur.

12. Procédé de charge d'un véhicule électrique, comprenant les étapes consistant à :
recevoir un courant alternatif 220 à 240 volts provenant d'une source d'alimentation ;
conduire le courant alternatif 220 à 240 volts de la source d'alimentation au véhicule électrique via un conduit d'alimentation (50) ;
commander la tension circulant sur le conduit d'alimentation (50) avec un relais de commutation (42) ;
isoler un processeur (38) de la tension sur le conduit d'alimentation (50) avec un circuit de commande (56) ;
couper l'alimentation du véhicule électrique avec un disjoncteur différentiel (46) ;
faire passer des signaux du conduit d'alimentation (50) représentant la tension sur le conduit d'alimentation (50) au processeur (38) via le circuit de commande (56), où le processeur est configuré pour réagir en fonction des signaux passant du conduit d'alimentation (50) pour commander le relais (42) et le disjoncteur différentiel (46) ;
rétablir, avec une fonction de réinitialisation automatique, le transfert de puissance au véhicule électrique après une interruption du transfert de puissance pendant une période de temps prédéterminée ou pendant un nombre d'essais prédéterminé, si le disjoncteur différentiel (46) interrompt le transfert de puissance au véhicule électrique ;
commander, avec le processeur (38), des composants du véhicule électrique y compris le chauffage ou le refroidissement du véhicule ;
afficher des informations à un utilisateur avec un dispositif d'affichage (40);
recevoir une entrée d'un utilisateur avec un dispositif d'entrée (32) ; et
fournir un raccord périphérique (51) à relier à au moins l'un d'un connecteur USB, d'un connecteur FireWire, d'un lecteur de carte, d'une interface de connecteur de véhicule OBD-II et d'un dispositif de communication sans fil.
